# EUROPÄISCHE PATENTSCHRIFT

(11) **EP 4 409 239 B1**
(45) Veröffentlichungstag und Bekanntmachung des Hinweises auf die Patenterteilung: **15.10.2025**
(21) Anmeldenummer: 22797326.0
(22) Anmeldetag: 27.09.2022
(51) Int. Cl.: G01D 21/00

(54) **MESSEINHEIT UND MESSSYSTEM**
MEASURING UNIT AND MEASURING SYSTEM
UNITÉ DE MESURE ET SYSTÈME DE MESURE

(30) Priorität: 27.09.2021 DE 102021124968
(43) Veröffentlichungstag der Anmeldung: 07.08.2024
(73) Patentinhaber: Innirion GmbH, 79108 Freiburg (DE)
(72) Erfinder: TANNHÄUSER, Robert, Freiburg 79108 (DE); OSTERTAG, Thomas, 79108 Freiburg (DE)
(74) Vertreter: LBP Lemcke, Brommer & Partner Patentanwälte mbB
(86) Internationale Anmeldenummer: PCT/EP2022/076815
(87) Internationale Veröffentlichungsnummer: WO 2023/046986

(56) Entgegenhaltungen:
- WO-A1-2018/189691
- WO-A2-2009/050087
- US-A1- 2006 244 568
- US-A1- 2010 245 057

## Beschreibung

Die Erfindung betrifft eine Messeinheit gemäß Anspruch 1 sowie ein Messsystem gemäß Anspruch 13.

Zum Erfassen von Messdaten an schwer zugänglichen Orten oder an Orten, welche sich in Bewegung, insbesondere in Rotation befinden, sind Messeinheiten bekannt, welche Messsignale drahtlos übertragen.

Solche Messeinheiten weisen eine oder mehrere Sensoreinheiten auf, um ein Messsignal auszugeben. Sensoren einer solchen Messeinheit sind beispielsweise Beschleunigungssensoren, um eine Beschleunigung oder Rotation zu detektieren. Das Messsignal wird von einer Signalverarbeitungseinheit der Messeinheit verarbeitet, beispielsweise in digitale, zeitlich periodisch erfasste Messdaten. Eine Signalübertragungseinheit der Messeinheit dient zum drahtlosen Übertragen der verarbeiteten Messsignale und weist hierzu eine Antenne auf.

Die Messeinheit weist weiterhin zwei Versorgungsanschlüsse auf, um einen Ackumulator als elektrischen Energiespeicher zur Stromversorgung der Messeinheit anzuschließen.

Solche Messeinheiten sind aus DE102019112629A1, WO2019122375A1, WO2017068158A1 sowie DE102004051145B4 bekannt:
Die Druckschrift WO2019122375A1 offenbart eine Messeinheit, welche patronenförmig ausgebildet ist, um in eine entsprechende Ausnehmung eines Werkzeughalters eingesetzt zu werden.

In Druckschrift DE102019112629A1 ist eine Spanneinrichtung offenbart welche es ermöglicht, ein Sensorelement zentrisch zur Spannachse aufzunehmen. Die Energieversorgung erfolgt mittels einer wiederaufladbaren Batteriezelle.

In WO2017068158A1 ist ein Messsystem mit einem wiederaufladbaren Energiespeicher offenbart. Der Energiespeicher kann mittels eines Ladeanschlusses oder berührungslos über einen induktiven Kopplungsmechanismus aufgeladen werden. In US2006/244568 A1 ist ein weiteres bekanntes Messsystem offenbart, welches berührungslos aufgeladen werden kann.

Häufig werden solche Messeinheiten in Bohrungen, insbesondere in Sackbohrungen eingesetzt, um eine mechanisch stabile und dauerhafte Verbindung mit dem zu vermessenden Objekt auszubilden. Insbesondere bei Anwendungen, bei welchen mittels der Messeinheit Bewegungen vermessen werden, ist typischerweise eine exakte Justierung der Messeinheit notwendig, um die Sensoren der Sensoreinheit an den gewünschten Messorten anzuordnen. Es ist daher wünschenswert, die Position einer Messeinheit in dem zu vermessenden Objekt nicht mehr zu verändern.

Der vorliegenden Erfindung liegt daher die Aufgabe zugrunde, die Anwendungsdauer einer solchen Messeinheit in einer vorgegebenen Position zu verlängern und dennoch einen kompakten Aufbau der Messeinheit zu ermöglichen.

Gelöst ist diese Aufgabe durch eine Messeinheit gemäß Anspruch 1 sowie ein Messsystem gemäß Anspruch 13. Vorteilhafte Ausgestaltungen der Messeinheit finden sich in den abhängigen Ansprüchen 2 bis 12 und vorteilhafte Ausgestaltungen des Messsystems in den abhängigen Ansprüchen 14 und 15.

Die erfindungsgemäße Messeinheit weist zumindest zwei Versorgungsanschlüsse zum Anschluss zumindest eines elektrischen Energiespeichers, insbesondere eines Akkumulators, zur Versorgung der Messeinheit mit elektrischer Energie auf. Weiterhin weist die Messeinheit zumindest eine Sensoreinheit zum Ausgeben eines Messsignals, zumindest eine Signalverarbeitungseinheit zum Verarbeiten des Messsignals der Sensoreinheit und mindestens eine Signalübertragungseinheit mit zumindest einer Antenne auf. Die Antenne weist zumindest einen Antennenpol auf.

Die Signalverarbeitungseinheit und die Signalübertragungseinheit sind zusammenwirkend ausgebildet, um mittels der Antenne die verarbeiteten Messsignale zu übertragen.

Wesentlich ist, dass die Messeinheit eine Trennweiche aufweist, welche mit dem Antennenpol, der Signalverarbeitungseinheit und mit einem der Versorgungsanschlüsse verbunden und dazu ausgebildet ist, zum Übertragen der verarbeiteten Messsignale für hochfrequente Signale eine Verbindung zwischen der Signalverarbeitungseinheit und dem Antennenpol zum Übertragen der verarbeiteten Messsignale sowie zumindest eine gedämpfte, bevorzugt keine Verbindung für hochfrequente Signale zwischen dem Antennenpol und dem mit der Trennweiche verbundenen Versorgungsanschluss auszubilden und zum Laden eines an die Versorgungsanschlüsse angeschlossenen Energiespeichers für niederfrequente Signale eine Verbindung zwischen dem Antennenpol und dem Versorgungsanschluss zum Aufladen des an den mit der Trennweiche verbundenen Versorgungsanschluss angeschlossenen Energiespeichers sowie zumindest eine gedämpfte, bevorzugt keine Verbindung für niederfrequente Signale zwischen Antennenpol und der Signalverarbeitungseinheit auszubilden und dass an einer außenliegenden Seite der Signalübertragungseinheit der Antennenpol elektrisch kontaktierbar ist.

Der vorliegenden Erfindung liegt die Erkenntnis zugrunde, dass es für eine hohe Abstrahlleistung für typische Anwendungsfälle sinnvoll ist, zumindest einen Antennenpol der Antenne der Messeinheit an einer im Einbauzustand außen liegenden Seite anzuordnen. Ein solcher Antennenpol ist somit in der Regel leicht zugänglich, ohne dass die Messeinheit in dem zu messenden Objekt bewegt oder ausgebaut werden muss. Die erfindungsgemäße Messeinheit ermöglicht es, einen Antennenpol der Antenne der Messeinheit einerseits zum Übertragen der verarbeiteten Messsignale zu verwenden und andererseits zum Laden eines an die Versorgungsanschlüsse der Messeinheit angeschlossenen Energiespeichers zu verwenden.

Hierzu weist die Messeinheit die Trennweiche auf, um im Fall der Signalübertragung hochfrequente Signale von der Signalverarbeitungseinheit zu dem Antennenpol, nicht jedoch zu dem Versorgungsanschluss zu leiten und im Ladefall niederfrequente Signale, insbesondere Gleichstrom, von dem Antennenpol zu dem Versorgungsanschluss zu leiten.

Hierdurch wird ein kompakter Aufbau ermöglicht, da der Antennenpol gleichzeitig als ein elektrischer Anschluss zum Laden des Energiespeichers verwendet wird.

Insbesondere ist es vorteilhaft, dass ein Gehäuse der Messeinheit elektrisch leitend ausgebildet ist und als Gegenpol des elektrischen Anschlusses zum Laden des Energiespeichers ausgebildet ist. Dies ist vorteilhaft, da keine zusätzlichen Anschlüsse zum Laden des Energiespeichers vorgesehen werden müssen und lediglich der Antennenpol der Antenne zugänglich sein muss, um ein Laden des Energiespeichers ohne ausbauen oder bewegen der Messeinheit zu ermöglichen. Der Gegenpol zum Aufladen des elektrischen Energiespeichers kann in einfacher Weise über das Gehäuse der Messeinheit unmittelbar oder mittelbar über eine mit dem Gehäuse der Messeinheit elektrisch leitend verbundene weitere Komponente, wie beispielweise eine Werkzeughalterung, in welche die Messeinheit eingesetzt ist, kontaktiert werden.

Die Trennweiche ist bevorzugt als passive Trennweiche ausgebildet, so dass kein aktives Umschaltsignal für die Trennweiche zum Laden oder Senden notwendig ist, wobei für niederfrequente Signale ausschließlich eine Verbindung zwischen Antennenpol und dem Versorgungsanschluss ausgebildet ist und für hochfrequente Signale ausschließlich eine Verbindung zwischen der Signalverarbeitungseinheit und dem Antennenpol ausgebildet ist.

Hierdurch ergibt sich der Vorteil, dass keine mechanisch bewegten Elemente benötigt werden. Darüber hinaus ist kein separates Schaltsignal zum Umschalten zwischen einem Sendevorgang und einem Ladevorgang notwendig, da hochfrequente Sendesignale von der Signalverarbeitungseinheit zu dem Antennenpol und niederfrequente Signale beim Ladevorgang, insbesondere Gleichstrom, von dem Antennenpol zu dem Versorgungsanschluss geleitet wird.

Eine wesentliche Funktion der Trennweiche ist, dass zum Übertragen der verarbeiteten Messsignale eine Verbindung zwischen der Signalverarbeitungseinheit und dem Antennenpol zum Übertragen der verarbeiteten Messsignale und zum Laden eines an die Versorgungsanschlüsse angeschlossenen Energiespeichers für niederfrequente Signale eine Verbindung zwischen dem Antennenpol und dem Versorgungsanschluss zum Aufladen des an den Versorgungsanschluss angeschlossenen Energiespeichers vorliegt. Es liegt hierbei im Rahmen der Erfindung, dass bei den vorgenannten Verbindungen technisch bedingte Dämpfungen durch Leitungswege und/oder weitere elektrische und/oder elektronische Komponenten bestehen. Vorteilhaft ist, dass hierdurch allenfalls eine geringe Dämpfung des Signals erfolgt.

Vorzugsweise ist die Trennweiche daher derart ausgebildet, dass zum Übertragen der verarbeiteten Messsignale eine Verbindung zwischen der Signalverarbeitungseinheit und dem Antennenpol zum Übertragen der verarbeiteten Messsignale mit einer Dämpfung kleiner 20 dB, insbesondere kleiner 10 dB, insbesondere kleiner 5 dB besteht und zum Laden eines an die Versorgungsanschlüsse angeschlossenen Energiespeichers für niederfrequente Signale eine Verbindung zwischen dem Antennenpol und dem Versorgungsanschluss zum Aufladen des an den Versorgungsanschluss angeschlossenen Energiespeichers mit einer Dämpfung kleiner 20 dB, insbesondere kleiner 10 dB, insbesondere kleiner 5 dB besteht.

Die passive Trennweiche weist bevorzugt an sich bekannte elektrische und/oder elektronische Elemente zum frequenzabhängigen Separieren von Signalen auf, insbesondere Spulen und Kondensatoren. Die Trennweiche ist bevorzugt als Frequenzweiche, insbesondere bevorzugt als passive Frequenzweiche, insbesondere bevorzugt als frequenzabhängiger Spannungsteiler ausgebildet.

Bei einem frequenzabhängigen Separieren von Signalen wird technisch bedingt auch bei Leitungswegen, bei denen für das betreffende Signal keine Verbindung bestehen soll, typischerweise keine vollständige Unterbrechung der Verbindung, sondern technisch bedingt lediglich eine hohe Dämpfung erzielt.

Vorzugsweise ist die Trennweiche derart ausgebildet, dass für hochfrequente Signale zwischen dem Antennenpol und dem Versorgungsanschluss eine Dämpfung von zumindest 10 dB, bevorzugt zumindest 20 dB, insbesondere zumindest 30 dB, ganz insbesondere zumindest 40 dB gegenüber einer nicht gedämpften Verbindung zu erzielen.

Die Trennweiche ist derart ausgebildet, dass für hochfrequente Signale eine Verbindung zwischen der Signalverarbeitungseinheit und dem Antennenpol zum Übertragen der verarbeiteten Messsignale besteht. Diese Verbindung weist bevorzugt nur eine technisch bedingte geringe, bevorzugt keine Dämpfung für hochfrequente Signale auf. Bei konkreten Ausführungsformen lassen sich geringe Dämpfungen durch Leitungswege oder andere elektrische Elemente typischerweise nicht vermeiden. Vorteilhafterweise ist die Trennweiche derart ausgebildet, dass die Verbindung zwischen der Signalverarbeitungseinheit und dem Antennenpol zum Übertragen der verarbeiteten Messsignale eine Dämpfung kleiner 30 dB, vorzugsweise kleiner 20 dB, besonders vorzugsweise kleiner 10 dB, bevorzugt kleiner 5 dB, besonders vorzugsweise kleiner 2 dB, insbesondere kleiner 1 dB aufweist.

Vorzugsweise ist die Trennweiche derart ausgebildet, dass für niederfrequente Signale zwischen der Signalverarbeitungseinheit und dem Antennenpol eine Dämpfung von zumindest 30 dB, insbesondere 50 dB, vorzugsweise 75 dB, besonders vorzugsweise 100 dB, bevorzugt 120 dB, besonders bevorzugt 150 dB, insbesondere 200 dB gegenüber einer nicht gedämpften Verbindung zu erzielen.

Die Trennweiche ist derart ausgebildet, dass für niederfrequente Signale eine Verbindung zwischen dem Antennenpol und dem Versorgungsanschluss zum Aufladen des an den Versorgungsanschluss angeschlossenen Energiespeichers besteht. Diese Verbindung sollte keine Dämpfung für niederfrequente Signale aufweisen. Bei konkreten Ausführungsformen lassen sich geringe Dämpfungen durch Leitungswege oder andere elektrische Elemente typischerweise nicht vermeiden. Vorteilhafterweise ist die Trennweiche derart ausgebildet, dass die Verbindung zwischen dem Antennenpol und dem Versorgungsanschluss zum Aufladen des an den Versorgungsanschluss angeschlossenen Energiespeichers eine Dämpfung kleiner 30 dB, vorzugsweise kleiner 20 dB, bevorzugt kleiner 10 dB, besonders bevorzugt kleiner 5 dB, insbesondere kleiner 1 dB aufweist.

Die Trennfrequenz einer Frequenzweiche ist vorliegend definiert als die Frequenz, bei der die Dämpfung der niederfrequenten Signale sowie die Dämpfung der hochfrequenten Signale äquivalent sind.

In einer alternativen bevorzugten Ausführungsform ist die Trennweiche als aktivschaltbare Trennweiche ausgebildet, welche mittels eines Schaltsignals zwischen einem Ladezustand und einem Sendezustand umschaltbar ausgebildet ist. In dem Ladezustand ist für niederfrequente Signale eine Verbindung zwischen dem Antennenpol und dem Versorgungsanschluss zum Aufladen des an den Versorgungsanschluss angeschlossenen Energiespeichers sowie keine Verbindung für niederfrequente Signale zwischen Antennenpol und der Signalverarbeitungseinheit ausgebildet. In dem Sendezustand ist für hochfrequente Signale eine Verbindung zwischen der Signalverarbeitungseinheit und dem Antennenpol zum Übertragen der verarbeiteten Messsignale sowie keine Verbindung für hochfrequente Signale zwischen Antennenpol und dem Versorgungsanschluss ausgebildet. Hierdurch ist eine eindeutige Vorgabe des gewünschten Zustands (Ladezustand oder Sendezustand) durch aktives Schalten möglich.

Vorteilhafterweise ist die Trennweiche mittels eines elektrischen Schaltsignals, eines elektromagnetischen Wellenschaltsignals oder eines magnetischen Schaltsignals zwischen Ladezustand und Sendezustand umschaltbar ausgebildet. Ein elektrisches Schaltsignal wird bevorzugt über Schaltanschlüsse, welche mit einem externen Schaltkreis verbunden werden können, übertragen. Bei der vorteilhaften Ausgestaltung einer mittels eines elektromagnetischen Wellenschaltsignals schaltbaren Trennweiche weist die Messeinheit bevorzugt einen Empfänger für elektromagnetische Wellenschaltsignale auf, welcher mit der Trennweiche verbunden ist, um empfangene Schaltsignale an die Trennweiche zu leiten. In der vorteilhaften Ausführungsform einer mittels eines magnetischen Schaltsignals aktiv schaltbaren Trennweiche weist die Messeinheit bevorzugt ein magnetfeldsensitives Element auf, welches mit der aktiv schaltbaren Trennweiche verbunden ist, um abhängig von dem Vorliegen eines Magnetfeldes ein Schaltsignal an die Trennweiche weiterzugeben. Besonders vorteilhaft ist es, dass bei Anlegen eines Magnetfeldes unmittelbar durch Einfluss des Magnetfeldes ein Umschalten der Trennweiche erfolgt.

Besonders vorteilhaft ist es, dass die aktiv schaltbare Trennweiche derart ausgebildet ist, dass in dem Ladezustand ausschließlich eine elektrisch leitende Verbindung zwischen dem Antennenpol und dem Versorgungsanschluss und keine elektrisch leitende Verbindung zwischen Antennenpol und der Signalverarbeitungseinheit besteht und im Sendezustand ausschließlich eine elektrisch leitende Verbindung zwischen dem Antennenpol und dem Versorgungsanschluss sowie keine elektrisch leitende Verbindung zwischen Antennenpol und der Signalverarbeitungseinheit besteht. Insbesondere ist es daher vorteilhaft, dass die aktiv schaltbare Trennweiche als aktiv schaltbarer Umschalter ausgebildet ist.

Vorteilhafterweise ist der aktiv schaltbare Umschalter als Umschaltrelais ausgebildet, insbesondere, um zwischen Ladezustand und Sendezustand mittels eines elektrischen Schaltsignals umzuschalten. In einer alternativen vorteilhaften Ausgestaltung ist der aktive schaltbare Umschalter als Reed-Umschalter ausgebildet, insbesondere, um abhängig von dem Vorliegen eines Magnetfeldes zwischen dem Ladezustand und dem Sendezustand umzuschalten.

Die typischen Frequenzbereiche zur Signalübertragung der verarbeiteten Messsignale liegen bei erheblich höheren Frequenzen als die Frequenz beim Ladevorgang. Vorteilhafterweise sind die hochfrequenten und niederfrequenten Signale durch mindestens eine Trennfrequenz unterteilt.

Die hochfrequenten Signale weisen somit Frequenzen größer der Trennfrequenz und die niederfrequenten Signale Frequenzen kleiner der Trennfrequenz auf.

In einer vorteilhaften Ausgestaltung sind die hochfrequenten und die niederfrequenten Signale durch eine erste und eine zweite Trennfrequenz unterteilt, wobei die erste Trennfrequenz kleiner als die zweite Trennfrequenz ist und die niederfrequenten Signale kleiner als die erste Trennfrequenz und die hochfrequenten Signale größer als die zweite Trennfrequenz sind. Vorteilhafterweise beträgt die Differenz zwischen zweiter Trennfrequenz und erster Trennfrequenz zumindest 1 MHz, bevorzugt zumindest 10 MHz, insbesondere bevorzugt zumindest 100 MHz.

Die Trennfrequenz oder bei der bevorzugten Ausführungsform mit einer ersten und einer zweite Trennfrequenz beide Trennfrequenzen liegen bevorzugt in einem Frequenzbereich, dessen obere Grenze abhängig von der Frequenz der hochfrequenten Signale zur Übertragung des Messignals ist und dessen untere Grenze vorzugsweise bei 0,1 Hz, insbesondere bei 1 Hz, insbesondere bei 10 Hz, insbesondere 55 Hz, insbesondere bei 65 Hz, insbesondere bei 100 Hz, insbesondere bei 1 kHz, insbesondere bei 500 kHz, bevorzugt bei 1 MHz, bevorzugt bei 5 MHz, weiter bevorzugt bei 9 MHz liegt.

Die obere Grenze des Frequenzbereichs der Trennfrequenz ist bevorzugt kleiner 70000 MHz, insbesondere kleiner 24000 MHz, insbesondere kleiner 5000 MHz, insbesondere kleiner 1 GHz, insbesondere kleiner 800 MHz.

Bevorzugt ist die obere Grenze des Frequenzbereichs der Trennfrequenz abhängig von dem Frequenzbereich der hochfrequenten Signale gewählt:
Wenn die hochfrequenten Signale im Bereich von 860 MHz bis 930 MHz liegen, ist die obere Grenze des Frequenzbereichs der Trennfrequenz vorzugsweise kleiner als 800 MHz, insbesondere kleiner als 500 MHz, insbesondere kleiner als 280 MHz. Wenn die hochfrequenten Signale im Bereich von 2400 MHz bis 2500 MHz liegen, ist die obere Grenze des Frequenzbereichs der Trennfrequenz vorzugsweise kleiner als 2400 MHz, insbesondere kleiner als 1 GHz, insbesondere kleiner als die für den vorherigen Fall bereits genannten oberen Frequenzgrenzwerte. Wenn die hochfrequenten Signale im Bereich von 5100 MHz bis 5880 MHz liegen, ist die obere Grenze des Frequenzbereichs der Trennfrequenz vorzugsweise kleiner als 5000 MHz, insbesondere kleiner als 3000 MHz, insbesondere kleiner als 2400 MHz, insbesondere kleiner als die für den vorherigen Fall bereits genannten oberen Frequenzgrenzwerte. Wenn die hochfrequenten Signale im Bereich von 24000 MHz bis 24250 MHz liegen, ist die obere Grenze des Frequenzbereichs der Trennfrequenz vorzugsweise kleiner als 24000 MHz, insbesondere kleiner als 23000 MHz, insbesondere kleiner als 10000 MHz, insbesondere kleiner als 6000 MHz, insbesondere kleiner als die für den vorherigen Fall bereits genannten oberen Frequenzgrenzwerte. Wenn die hochfrequenten Signale im Bereich von 57000 MHz bis 71000 MHz liegen, ist die obere Grenze des Frequenzbereichs der Trennfrequenz vorzugsweise kleiner als 70000 MHz, insbesondere kleiner als 50000 MHz, insbesondere kleiner als 25000 MHz, insbesondere kleiner als die für den vorherigen Fall bereits genannten oberen Frequenzgrenzwerte.

Die Trennweiche ist somit bevorzugt ausgebildet, dass für Signale mit einer Frequenz größer der Trennfrequenz - hochfrequente Signale - eine höchstens schwach gedämpfte Verbindung zwischen der Signalverarbeitungseinheit und dem Antennenpol zum Übertragen der verarbeiteten Messsignale sowie keine, beziehungsweise eine stark gedämpfte, Verbindung zwischen Antennenpol und dem Versorgungsanschluss ausgebildet ist und für Signale mit einer Frequenz kleiner der Trennfrequenz eine Verbindung zwischen dem Antennenpol und dem Versorgungsanschluss zum Aufladen des an den Versorgungsanschluss angeschlossenen Energiespeichers sowie keine Verbindung zwischen Antennenpol und der Signalverarbeitungseinheit ausgebildet ist.

Die Trennweiche ist vorzugsweise derart ausgebildet, dass die Verbindung zwischen der Signalverarbeitungseinheit und dem Antennenpol für die niederfrequenten Signale eine Dämpfung von zumindest 30 dB, insbesondere 50 dB, vorzugsweise 75 dB, besonders vorzugsweise 100 dB, bevorzugt 120 dB, gegenüber einer nicht gedämpften Verbindung aufweist, um eine Signalübertragung auf diesem Signalweg möglichst weitgehend zu blockieren.

Vorteilhafterweise ist die Trennweiche derart ausgebildet, dass die Verbindung zwischen dem Antennenpol und dem Versorgungsanschluss für niederfrequente Signale eine Dämpfung von kleiner 30 dB, vorzugsweise kleiner 20 dB, besonders vorzugsweise kleiner 10 dB, bevorzugt kleiner 5 dB, besonders vorzugsweise kleiner 2 dB, insbesondere kleiner 1 dB gegenüber einer nicht gedämpften Verbindung aufweist, um eine gute Signalübertragung auf diesem Signalweg zu ermöglichen.

Zudem ist die Trennweiche vorzugsweise derart ausgebildet, dass die Verbindung zwischen der Signalverarbeitungseinheit und dem Antennenpol für die hochfrequenten Signale zum Übertragen der verarbeiteten Messsignale eine Dämpfung kleiner 30 dB, vorzugsweise kleiner 20 dB, besonders vorzugsweise kleiner 10 dB, bevorzugt kleiner 5 dB, besonders vorzugsweise kleiner 2 dB, insbesondere kleiner 1 dB gegenüber einer nicht gedämpften Verbindung aufweist, um eine gute Signalübertragung auf diesem Signalweg zu ermöglichen.

Bevorzugt ist die Trennweiche derart ausgebildet, dass die Verbindung zwischen dem Antennenpol und dem Versorgungsanschluss zum Aufladen des an den Versorgungsanschluss angeschlossenen Energiespeichers für die hochfrequenten Signale zum Übertragen der verarbeiteten Messsignale eine Dämpfung von zumindest 10 dB, bevorzugt zumindest 20 dB, insbesondere zumindest 30 dB, ganz insbesondere zumindest 40 dB gegenüber einer nicht gedämpften Verbindung aufweist um eine Signalübertragung auf diesem Signalweg möglichst weitgehend zu blockieren.

Die hochfrequenten Signale weisen bevorzugt eine Frequenz auf, welche bevorzugt kleiner 100 GHz, vorzugsweise kleiner 50 GHz, bevorzugt kleiner 10 GHz ist, weiter bevorzugt kleiner 5,9 GHz ist, insbesondere kleiner 2,5 GHz ist.

Bevorzugt liegt die Frequenz der hochfrequenten Signale im Bereich 2300 MHz bis 71000 MHz, insbesondere in einem oder mehreren, bevorzugt in einem der nachfolgenden Frequenzbereiche:
- 860 MHz bis 930 MHz;
- 863 MHz bis 870 MHz;
- 902 MHz bis 928 MHz;
- 2400 MHz bis 2500 MHz;
- 2401 MHz bis 2481 MHz;
- 5100 MHz bis 5880 MHz;
- 5720 MHz bis 5880 MHz;
- 24000 MHz bis 24250 MHz;
- 57000 MHz bis 71000 MHz.

Die Messeinheit weist bevorzugt ein elektrisch leitendes Gehäuse auf. Ein elektrisch leitendes Gehäuse weist den Vorteil auf, dass das Gehäuse als Masseleitung und/oder Massepol verwendet werden kann, dies erfolgt bevorzugt über eine Kontaktierung mit dem Massepol des elektrischen Energiespeichers. Darüber hinaus kann über ein elektrisch leitendes Gehäuse in unaufwendiger Weise ein elektrischer Kontrakt mit einem elektrisch leitenden Objekt, insbesondere metallischem Objekt, in welches die Messeinheit eingesetzt wird, ausgebildet werden.

Vorteilhafterweise weist die Messeinheit ein ferromagnetisches Gehäuse auf. Hierdurch kann in unaufwendiger Weise ein Ladeanschluss, wie nachfolgend beschrieben, lösbar an der Messeinheit angeordnet werden.

Die Antenne der Messeinheit ist bevorzugt als Monopolantenne oder Dipolantenne ausgebildet.

Besonders vorteilhaft ist es, die Antenne als Monopolantenne auszubilden. Hierdurch kann ein elektrisch leitendes Gehäuse der Messeinheit und/oder ein elektrisch leitendes Objekt, an welchem die Messeinheit angeordnet oder in welchem die Messeinheit angeordnet ist, als Massenpol der Antenne benutzt werden. Es ist daher insbesondere vorteilhaft, dass die Antenne als Monopolantenne ausgebildet ist und der Massenpol mit einem elektrisch leitenden Gehäuse der Messeinheit verbunden ist und/oder die Messeinheit einen Massenpol-Kontakt aufweist, um ein externes metallisches Objekt, insbesondere ein metallisches Objekt, in welchem die Messeinheit angeordnet wird, als Massenpol zu kontaktieren.

Bei Ausbildung der Antenne als Monopolantenne ist es vorteilhaft, dass die Signalübertragungseinheit eine äußere Ebene mit dem Antennenpol und eine innere Ebene mit einem Massenpol, zur Ausbildung der Monopolantenne, aufweist. Hierdurch wird eine vorteilhafte Abstrahlcharakteristik erzielt.

Es liegt im Rahmen der Erfindung, dass die Trennweiche unmittelbar über eine elektrische Leitung mit dem Versorgungsanschluss zum Laden des Energiespeichers verbunden ist. Ebenso liegt es im Rahmen der Erfindung, dass im Leitungsweg zwischen Trennweiche und Versorgungsanschluss weitere elektrische oder elektronische Komponenten, insbesondere Widerstände oder Regeleinheiten wie beispielsweise Laderegler, angeordnet sind.

Der elektrisch kontaktierbare Antennenpol weist bevorzugt eine metallische Oberfläche zur elektrischen Kontaktierung auf. Vorteilhaft ist es, wenn die Oberfläche des elektrisch kontaktierbaren Antennenpols beschichtet ist, bevorzugt vergoldet ist. Hierdurch wird ein dauerhaft hochwertiger elektrischer Kontakt beim Ladevorgang begünstigt.

Die eingangs genannte Aufgabe ist weiterhin durch ein Messsystem gemäß Anspruch 13 gelöst. Das Messsystem weist eine erfindungsgemäße Messeinheit, insbesondere eine bevorzugte Ausführungsform hiervon, auf und eine Ladeeinheit mit zumindest einem Ladeanschluss. Der Ladeanschluss ist zum Anordnen an den Antennenpol der Signalübertragungseinheit ausgebildet und weist zumindest einen ersten elektrischen Ladekontakt auf, welcher derart angeordnet ist, dass bei dem am Antennenpol der Signalübertragungseinheit angeordneten Ladeanschluss ein elektrisch leitender Kontakt zwischen Antennenpol und dem ersten Ladekontakt des Ladeanschlusses besteht. Hierdurch kann in unaufwendiger Weise durch Anordnen des Ladeanschlusses an der Messeinheit der Ladevorgang eines mit der Messeinheit verbundenen elektrischen Energiespeichers gestartet werden.

Bevorzugt erfolgt das Aufladen des an die Messeinheit angeschlossenen elektrischen Energiespeichers mittels Gleichstrom. Das an dem Antennenpol beim Ladevorgang anliegende Signal ist somit niederfrequent, insbesondere niederfrequent im Grenzübergang zur Frequenz 0 Hz.

Vorteilhafterweise weist der Ladeanschluss einen Magnet, bevorzugt einen Permanentmagnet, auf, um den Ladeanschluss lösbar an der Messeinheit anzuordnen. Hierdurch wird eine einfache Handhabung erzielt.

Insbesondere ist es vorteilhaft, dass gemäß der zuvor beschriebenen vorteilhaften Ausführungsform die Trennweiche als Reed-Umschalter ausgebildet ist. Insbesondere ist es vorteilhaft, dass der Magnet des Ladeanschlusses und der Reed-Umschalter derart zusammenwirkend ausgebildet sind, dass bei an der Messeinheit angeordnetem Ladeanschluss das Magnetfeld des Magneten des Ladeanschlusses ein Umschalten des Reed-Umschalters der Messeinheit bewirkt.

In einer vorteilhaften Ausgestaltung des Messsystems weist der Ladeanschluss einen zweiten elektrischen Ladekontakt auf, welcher derart angeordnet ist, dass bei dem am Antennenpol der Signalübertragungseinheit angeordneten Ladeanschluss ein elektrisch leitender Kontakt zwischen dem Gehäuse der Messeinheit und dem zweiten Ladekontakt des Ladeanschlusses besteht. Das Gehäuse der Messeinheit ist hierbei bevorzugt elektrisch leitend ausgebildet oder weist zumindest in dem Bereich, in welchem der zweite elektrische Ladekontakt an dem Gehäuse anliegt, einen elektrisch leitenden Gegenkontakt auf.

Der erste elektrische Ladekontakt ist über den Antennenpol mittelbar oder unmittelbar mit dem ersten Versorgungsanschluss und der zweite elektrische Ladekontakt über das Gehäuse der Messeinheit mittelbar oder unmittelbar mit dem zweiten Versorgungsanschluss der Messeinheit verbunden, sodass über ersten und zweiten elektrischen Ladekontakt in einfacher Weise ein an die Versorgungsanschlüsse der Messeinheit angeschlossener elektrischer Energiespeicher geladen werden kann.

Die Ladeeinheit weist bevorzugt einen Transformator zur galvanischen Potenzialtrennung zwischen dem Potenzial der Messeinheit beim Ladevorgang und dem Potenzial der Versorgungsspannung der Ladeeinheit auf.

Die Ladeeinheit ist bevorzugt derart ausgebildet, dass sie beim Ladevorgang einen Gleichstrom zum Laden des an die Versorgungsanschlüsse angeschlossenen Energiespeichers erzeugt.

Der Energiespeicher ist bevorzugt wiederaufladbar ausgebildet. Es liegt im Rahmen der Erfindung, den Energiespeicher als Akkumulator oder als kapazitativen Energiespeicher, insbesondere als Kondensator, bevorzugt als Superkondensator (supercap) auszubilden.

Die Signalübertragungseinheit ist bevorzugt derart ausgebildet und angeordnet, dass an einer außenliegenden Seite der Signalübertragungseinheit der Antennenpol elektrisch kontaktierbar ist.

Weitere vorteilhafte Merkmale und Ausgestaltungen werden im Folgenden anhand der Figuren und von Ausführungsbeispielen erläutert. Dabei zeigt:
- Figur 1: ein erstes Ausführungsbeispiel einer erfindungsgemäßen Messeinheit mit Monopolantenne im Sendezustand;
- Figur 2: das Ausführungsbeispiel gemäß Figur 1 im Ladezustand;
- Figur 3: ein zweites Ausführungsbeispiel einer erfindungsgemäßen Messeinheit mit Monopolantenne im Sendezustand;
- Figur 4: das Ausführungsbeispiel gemäß Figur 3 im Ladezustand;
- Figur 5: ein drittes Ausführungsbeispiel einer erfindungsgemäßen Messeinheit mit Dipolantenne im Sendezustand;
- Figur 6: das dritte Ausführungsbeispiel gemäß Figur 5 im Ladezustand;
- Figur 7: eine Detailansicht der Monopolantenne des ersten und zweiten Ausführungsbeispiels;
- Figur 8: die Messeinheit des ersten Ausführungsbeispiels eingebaut in einen Werkzeughalter;
- Figur 9: die Messeinheit des ersten Ausführungsbeispiels eingebaut in eine Messmanschette für Drehstähle und andere Stangen;
- Figur 10: ein Ausführungsbeispiel einer Trennweiche für das erste und dritte Ausführungsbeispiel der Messeinheit;
- Figur 11: ein Ausführungsbeispiel einer Trennweiche für die Abwandlung des zweiten Ausführungsbeispiels der Messeinheit.

Sämtliche Figuren zeigen schematische, nicht maßstabsgetreue Darstellungen. Gleiche Bezugszeichen in den Figuren bezeichnen gleiche oder gleich wirkende Elemente.

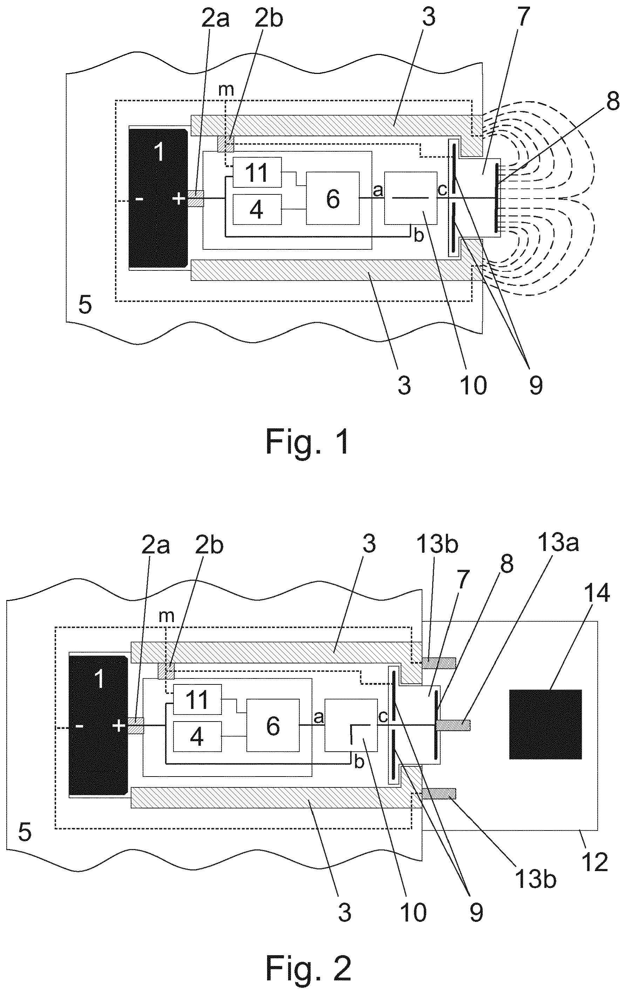

Die in den Figuren 1 bis 6 dargestellten Ausführungsbeispiele weisen für die schaltungstechnische Beschreibung, die Bezeichnung a, b, c und m auf. Eine Erläuterung dieser Bezeichnungen erfolgt in der Figurenbeschreibung 10 und Figurenbeschreibung 11.

Die in den Figuren 1 bis 6 dargestellten Ausführungsbeispiele von Messeinheiten weisen kreiszylindrische Gehäuse 3 auf. In den Figuren ist jeweils ein Schnitt durch die Zylinderachse dargestellt.

Die in den Figuren dargestellten Ausführungsbeispiele sind zum Anordnen in einem Sackloch, vorliegend in einem Sackloch eines Werkzeughalters, ausgebildet.

Das in den Figuren 1 und 2 dargestellte erste Ausführungsbeispiel einer erfindungsgemäßen Messeinheit weist zwei Versorgungsanschlüsse zum Anschluss eines als Akkumulator ausgebildeten elektrischen Energiespeichers 1 zur Versorgung der Messeinheit mit elektrischer Energie auf.

Ein erster Versorgungsanschluss 2a ist mit dem positiven Pol des elektrischen Energiespeichers 1 verbunden. Ein zweiter Versorgungsanschlüsse 2b ist mit dem elektrisch leitenden Gehäuse 3 der Messeinheit verbunden. Wie in den Figuren ersichtlich, wird in dem Sackloch des Werkzeughalters 5 zunächst der elektrische Energiespeicher angeordnet, sodass ein Pol des elektrischen Energiespeichers 1 mit dem Werkzeughalter 5 in Kontakt steht. Da sowohl der Werkzeughalter 5 als auch das Gehäuse 3 elektrisch leitend sind, besteht eine elektrisch leitende Verbindung zwischen dem Werkzeughalter 5 zugewandten Kontakt des elektrischen Energiespeichers 1 und dem zweiten Versorgungsanschlüsse 2b.

Die Messeinheit 1 weist eine Sensoreinheit 4 auf, welche vorliegend einen Beschleunigungssensor zum Erfassen einer Drehbewegung des Werkzeughalters aufweist. Die Sensoreinheit 4 ist mit einer Signalverarbeitungseinheit 6 verbunden, um ein Messsignal des Sensors der Sensoreinheit 4 an die Signalverarbeitungseinheit 6 auszugeben.

Die Messeinheit weist weiterhin eine Signalübertragungseinheit 7 mit einer Antenne auf, welche einen Antennenpol 8 aufweist. Der flächig ausgebildete Antennenpol 8 ist am äußeren, dem ersten Versorgungsanschluss 2a gegenüberliegenden Ende der Messeinheit angeordnet.

Signalverarbeitungseinheit 6 und Signalübertragungseinheit 7 sind zusammenwirkend ausgebildet, um mittels der Antenne, insbesondere des Antennenpols 8, die verarbeiteten Messsignale zu übertragen.

Die Antenne ist vorliegend in Figur 1 bis 4 als monopolare Antenne (Monopolantenne) mit dem Antennenpol 8 ausgebildet. Den Massenpol der monopolaren Antenne bildet das Gehäuse 3 der Messeinheit, Teilbereiche des Werkzeughalters 5 sowie eine Massenpolebene 9. Antennenpol 8 und Massenpolebene 9 sind als Kreisscheiben ausgebildet und konzentrisch in der Signalübertragungseinheit 7 angeordnet. Die Massenpolebene 9 weist im Mittelpunkt eine Öffnung auf, um eine elektrische Kontaktierung des Antennenpols 8 ohne Kontaktierung der Massenpolebene zu ermöglichen.

Die Messeinheit 1 weist eine Trennweiche 10 auf, welche bei dem ersten Ausführungsbeispiel als Frequenzweiche ausgebildet ist. Die Trennweiche 10 ist mit dem Antennenpol 8, der Signalverarbeitungseinheit 6 und mit dem Versorgungsanschluss 2a verbunden.

Die Trennweiche 10 ist als Frequenzweiche mit einer Trennfrequenz von 1 GHz ausgebildet, sodass für hochfrequente Signale größer der Trennfrequenz eine Verbindung zwischen der Signalverarbeitungseinheit 6 und dem Antennenpol 8 zum Übertragen der verarbeiteten Messsignale sowie keine Verbindung für solche hochfrequenten Signale zwischen dem Antennenpol 8 und dem Versorgungsanschluss 2a ausgebildet ist. Für niederfrequente Signale kleinerer Trennfrequenz ist durch die Ausgestaltung der Trennweiche als Frequenzweiche eine Verbindung zwischen dem Antennenpol 8 und dem Versorgungsanschluss 2a ausgebildet und keine Verbindung für solche niederfrequenten Signale zwischen dem Antennenpol 8 und der Signalverarbeitungseinheit 6.

Es ist somit ohne aktives Umschalten möglich, die in den Figuren 1 und 2 gezeigte Messeinheit in einem Sendezustand oder einem Ladezustand zu betreiben.

Bei dem in Figur 1 dargestellten Sendezustand wird das als Wellensignal verarbeitete Messsignal von der Signalverarbeitungseinheit 6 über die Trennweiche 10 zu dem Antennenpol 8 geleitet. Die Messeinheit weist weiterhin einen Spannungsregler 11 auf. Dieser dient dazu, die Signalverarbeitungseinheit sowie die Sensoreinheit mit der erforderlichen stabilisierten Versorgungsspannung zu speisen und eine Isolierung von der Bezugsmasse zu erzielen.

Die Signalverarbeitungseinheit 6 ist mit dem Spannungsregler 11 verbunden und wird von diesem mit elektrischer Energie versorgt. Darüber hinaus besteht über den Spannungsregler 11 ein Erdkontakt der Signalverarbeitungseinheit 6 zu dem zweiten Versorgungsanschluss 2b und zu Massenpolebene 9, um den Massenpol der monopolaren Antenne über die Massenpolebene 9, das Gehäuse 3 und Teilbereiche des Werkzeughalters 5 auszubilden. Schematisch sind in Figur 1 die Feldlinien elektromagnetischer Wellen beim Sendevorgang als gestrichelte Linien eingezeichnet.

In Figur 2 ist der Ladezustand der Messeinheit dargestellt. Hierzu wird ein Ladeanschluss 12 an dem Gehäuse 3 und der Signalübertragungseinheit 7 der Messeinheit angeordnet. Der Ladeanschluss weist einen ersten elektrischen Ladekontakt 13a und einen zweiten elektrischen Ladekontakt 13b auf, welche derart angeordnet sind, dass bei an der Messeinheit angeordnetem Ladeanschluss 12 der erst Ladekontakt 13a elektrisch leitend mit dem Antennenpol 8 und der zweite Ladekontakt 13b elektrisch leitend mit dem Gehäuse 3 verbunden ist.

In Figur 2 ist somit schematisch ein Ausführungsbeispiel eines erfindungsgemäßen Messsystems dargestellt, mit einer Ladeeinheit, welche zusätzlich zu dem bereits beschriebenen Ladeanschluss 12 einen Transformator 14 aufweist, mit dem die externe Versorgungsspannung des Ladegeräts von der Gleichspannung von 4,2 V im Ladegerät galvanisch getrennt wird, sodass das Nullpotenzial der internen Gleichspannung unabhängig von dem Nullpotenzial der externen Versorgungsspannung des Transformators 14 ist.

Wie in Figur 2 dargestellt, besteht für die Gleichspannung über die Trennweiche 10 eine Verbindung zwischen dem Antennenpol 8 und somit dem ersten Ladekontakt 13a und dem positiven Anschluss des elektrischen Energiespeichers 1. Über das Gehäuse 3 und Teilbereiche des Werkzeughalters 5 besteht eine elektrisch leitende Verbindung zwischen dem zweiten Ladekontakt 13b und dem negativen Pol des elektrischen Energiespeichers 1. Es ist somit ein Laden des elektrischen Energiespeichers 1 möglich, ohne dass die Messeinheit aus dem Werkzeughalter entfernt werden muss und ohne dass separate Ladeanschlüsse an der Messeinheit zum Laden notwendig sind.

Aufgrund der Ausgestaltung der Trennweiche 10 als Frequenzweiche können Sendezustand und Ladezustand gleichzeitig vorliegen. Es ist somit möglich, dass gleichzeitig hochfrequente Signale von der Signalverarbeitungseinheit 6 über den Antennenpol 8 gesendet werden und niederfrequente Signale, vorliegend die zum Laden verwendete Gleichspannung, welche an dem Antennenpol 8 und dem Gehäuse 3 der Messeinheit anliegt, zum Laden des elektrischen Energiespeichers 1 zu verwenden.

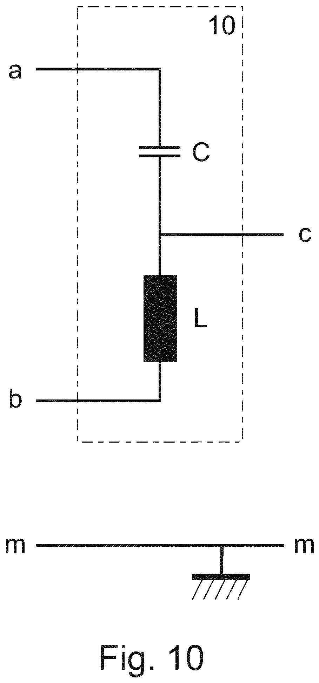

Die Trennweiche 10 ist gemäß der Darstellung in Figur 10 und der zugehörigen Figurenbeschreibung ausgebildet.

In einer vorteilhaften Weiterbildung des ersten Ausführungsbeispiels ist die Signalverarbeitungseinheit 6 zusätzlich als Empfangseinheit ausgebildet, um Start- und Stopp-Signale zum Starten und zum Beenden des Sendevorgangs von Messsignalen zu empfangen. Sofern während des Ladevorgangs kein Senden von Messsignalen gewünscht ist, kann bei dieser vorteilhaften Weiterbildung durch Senden des Stopp-Signals an die Signalverarbeitungseinheit 6 das Senden von Messsignalen beendet werden und nach dem Ladevorgang durch Senden des Startsignals an die Signalverarbeitungseinheit 6 das Senden von Messsignalen wieder gestartet werden.

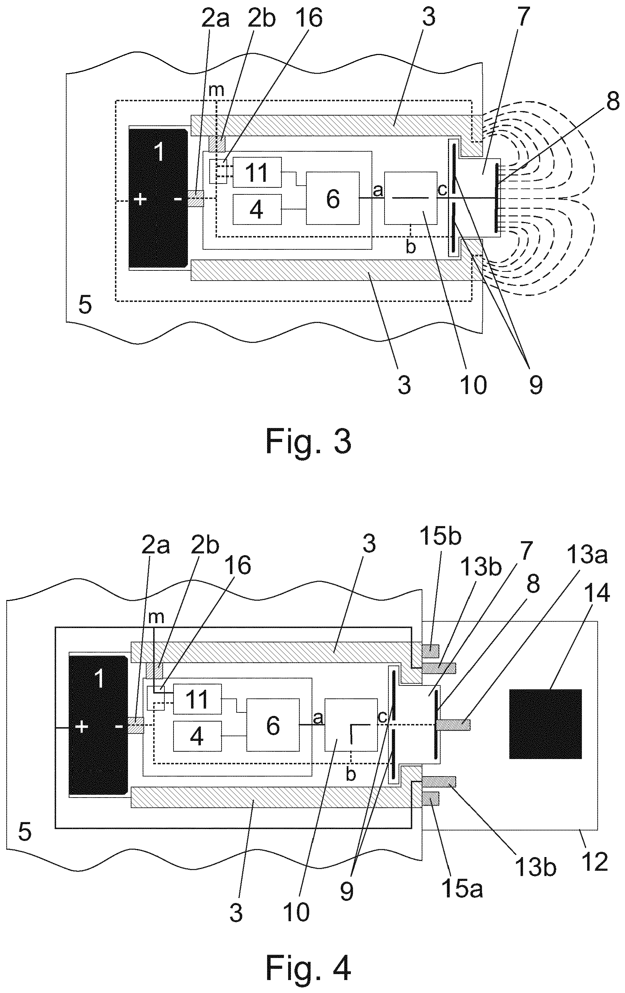

In den Figuren 3 und 4 ist ein zweites Ausführungsbeispiel einer erfindungsgemäßen Messeinheit dargestellt, welches in der Mehrzahl der technischen Merkmale mit dem in den Figuren 1 und 2 dargestellten ersten Ausführungsbeispiel übereinstimmt. Zur Vermeidung von Wiederholungen werden nachfolgend die wesentlichen Unterschiede erläutert:
Die Trennweiche 10 des zweiten Ausführungsbeispiels ist als elektrischer Umschalttaste, vorliegend als Reed-Kontakt ausgebildet. Der Reed-Kontakt ist derart angeordnet, dass ohne Anliegen eines Magnetfeldes eine elektrisch leitende Verbindung zwischen der Signalverarbeitungseinheit 6 und dem Antennenpol 8 und keine elektrisch leitende Verbindung zwischen dem Antennenpol 8 und dem ersten Versorgungsanschluss 2a besteht. Bei Anliegen eines Magnetfeldes erfolgt ein Umschalten des Reed-Kontaktes, sodass keine elektrisch leitende Verbindung zwischen Antennenpol 8 und Signalverarbeitungseinheit 6, jedoch eine elektrisch leitende Verbindung zwischen Antennenpol 8 und ersten Versorgungsanschluss 2a besteht.

In einer alternativen Ausführungsform des zweiten Ausführungsbeispiels ist die Trennweiche ebenso wie im ersten Ausführungsbeispiel als passive Frequenzweiche ausgeführt. Bei dieser alternativen Ausführungsform des 2. Ausführungsbeispiels ist die Trennweiche 10 gemäß der Darstellung in Figur 10 und der zugehörigen Figurenbeschreibung ausgebildet.

Der in Figur 4 dargestellte Ladeanschluss 12 weist zusätzlich zwei Permanentmagnete 15a und 15b auf. Diese sind derart angeordnet, dass einerseits der Ladeanschluss 12 lösbar an der Messeinheit angeordnet werden kann. Darüber hinaus führt das Magnetfeld der Permanentmagnete 15a und 15b zu einem Umschalten des Reed-Kontaktes und damit zu einem Umschalten vom Sendezustand zu dem Ladezustand der Messeinheit.

Wie in den Figuren 3 und 4 ersichtlich, ist darüber hinaus der elektrische Energiespeicher 1 mit umgekehrter Polung im Vergleich zu dem in den Figuren 1 und 2 dargestellten ersten Ausführungsbeispiel angeordnet, sodass bei dem zweiten Ausführungsbeispiel der positive Pol des elektrischen Energiespeichers 1 mit dem Werkzeughalter 5 und somit dem Gehäuse 3 und dem zweiten Versorgungsanschluss 2b in Kontakt steht und entsprechend der negative Pol des elektrischen Energiespeichers mit dem ersten Versorgungsanschluss 2a in Kontakt steht. Die Massenpolebene 9 der Antenne der Messeinheit ist entsprechend im Unterschied zu dem ersten Ausführungsbeispiel nicht mit dem Gehäuse 3 der Messeinheit verbunden, sondern mit dem ersten Versorgungsanschluss 2a.

Bei dem in Figur 3 dargestellten Sendezustand ist es aufgrund der Anordnung des elektrischen Energiespeichers notwendig, dass einerseits für hochfrequente Signale eine Verbindung zwischen dem negativen Pol des elektrischen Energiespeichers 1 und dem zweiten Versorgungsanschluss 2b und somit dem Gehäuse 3 und dem Werkzeughalter 5 besteht, um den Massenpol der monopolaren Antenne zusammen mit Massenpolebene 9 auszubilden. Ebenso ist es im Sendezustand notwendig, dass für die Gleichstromversorgung durch den elektrischen Energiespeicher 1 und somit für niederfrequente Signale keine Verbindung zwischen dem ersten Versorgungsanschluss 2a und dem zweiten Versorgungsanschluss 2b besteht, da sich sonst über das Gehäuse 3 und dem Werkzeughalter 5 ein Kurzschluss ausbilden würde.

Die Messeinheit gemäß dem zweiten Ausführungsbeispiel weist daher zusätzlich zu der Trennweiche 10 eine zweite Trennweiche 16 auf. Diese ist vorliegend als Kondensator ausgebildet, welcher zwischen dem positiven und negativen Anschluss des Spannungsreglers 11 angeordnet ist.

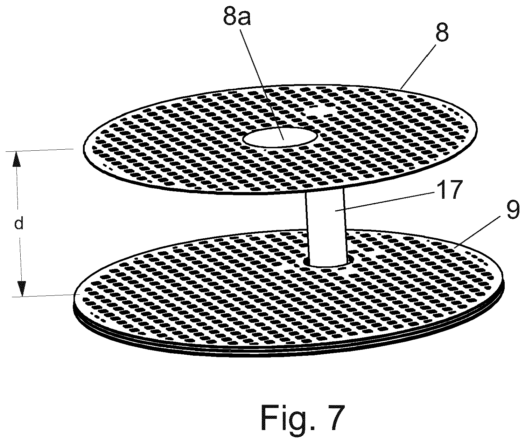

Eine Detailansicht der Monopolantenne des ersten und des zweiten Ausführungsbeispiels gemäß der Figuren 1 bis 4 ist in Figur 7 dargestellt. Die Darstellung zeigt die vorteilhafte Anordnung, dass die Signalübertragungseinheit 6 eine äußere Ebene mit dem Antennenpol 8 und eine innere Ebene mit einem Massenpol in einer Massenpolebne 9 der Monopolantenne aufweist. Durch die in Figur 7 dargestellte Anordnung wird eine bessere Abstrahlcharakteristik erzielt. Der Antennenpol sowie die Massenpolebene sind scheibenförmig ausgeführt und sind konzentrisch mit einem Abstand d, vorliegend 2,5 mm, übereinander positioniert. Die Massenpolebene weist eine Aussparung auf, diese Aussparung dient dazu, einen Kontaktierungsstift 17 des Antennenpols durchzuführen, um den Antennenpol 8 an der innenliegenden Seite der Monopolantenne zu kontaktieren. Der Kontaktierungsstift ist sowohl leitend mit dem Antennenpol Verbunden als auch mit der Trennweiche 10. Der Antennenpol 8 weist eine kreisförmige Kontaktfläche 8a, welche elektrisch leitfähig ist, auf. Diese Kontaktfläche dient als Kontaktpunkt zur Kontaktierung des Ladekontakts 13a mit dem Antennenpol 8.

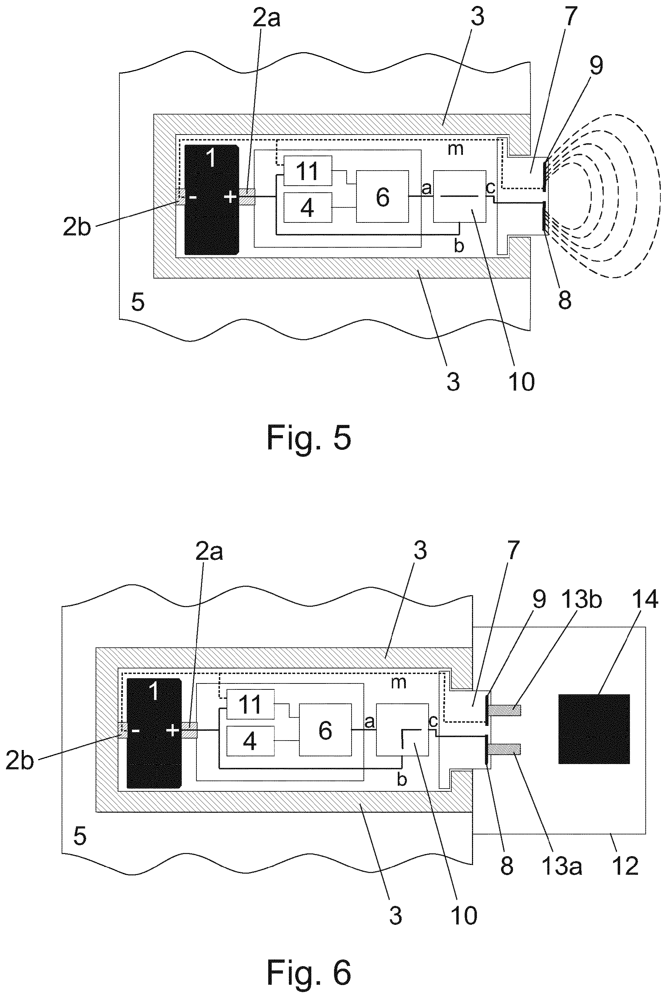

In den Figuren 5 und 6 ist ein weiteres, drittes Ausführungsbeispiel einer erfindungsgemäßen Messeinheit dargestellt, welches in der Mehrzahl der technischen Merkmale mit dem in den Figuren 1 bis 4 dargestellten Ausführungsbeispiele übereinstimmt. Zur Vermeidung von Wiederholungen werden nachfolgend die wesentlichen Unterschiede erläutert:
Im Gegensatz zu den zuvor behandelten Ausführungen mit Monopolantennen ist in Figur 5 das dritte Ausführungsbeispiel mit einer Dipolantenne gezeigt. Die Dipolantenne des dritten Ausführungsbeispiels unterscheidet sich dahingehend von den Monopolantennen des ersten und zweiten Ausführungsbeispiels, dass kein Massebezug über das Gehäuse (Groundplane) benötigt wird. Bedingt durch die symmetrische Speisung der Dipolantenne und des direkten Massebezugs durch Kontaktierung mit dem Massenpol des Energiespeichers kann das Gehäuse 3 und ebenso ein Werkzeughalter oder eine Messmanschette, in welches die Messeinheit eingesetzt ist, auch aus einem elektrisch nichtleitenden Material gefertigt sein.

Der Antennenpol 8 sowie der Massenpol 9 liegen gemeinsam in einer Ebene an der Außenseite der Signalübertragungseinheit, sind jedoch nichtleitend miteinander verbunden und bilden gemeinsam die Dipolantenne aus. Im Sendezustand erstreckt sich das elektromagnetische Feld von Antennenpol 8 bis zum Massenpol 9 der Dipolantenne, dies ist in den Figuren 5 mit den gestrichelten Linien gezeigt. Im dargestellten Sendezustand wird das als Wellensignal verarbeitete Messsignal von der Signalverarbeitungseinheit 6 über die Trennweiche 10 zu dem Antennenpol der Dipolantenne geleitet. Der Massenpol 9 der Antenne ist direkt mit dem Massenpol des Energiespeichers Verbunden. In diesem Ausführungsbeispiel umfasst das Gehäuse 3 zusätzlich den elektrischen Energiespeicher 1 und schließt somit die Messeinheit im Bereich des Energiespeichers ab.

In Figur 6 ist das zuvor in Figur 5 gezeigte dritte Ausführungsbeispiel im Ladezustand dargestellt. Der Unterschied zu den dargestellten Ladezuständen des ersten und des zweiten Ausführungsbeispiels gemäß Figur 2 und Figur 4 liegt primär in der Anordnung der Ladekontakte. Die Ladekontakte 13a sowie 13b der Figur 6 kontaktieren direkt den Antennenpol 8 sowie den Massenpol 9 der Dipolantenne der Messeinheit. Die Funktionalität der Trennweiche des dritten Ausführungsbeispiels entspricht der Funktionalität der Trennweichen des ersten und des zweiten Ausführungsbeispiels.

In einer alternativen Ausgestaltung des ersten und des dritten Ausführungsbeispiels ist die Trennweiche als aktive Trennweiche (Reed-Kontakt) wie bei dem zweiten Ausführungsbeispiel beschrieben ausgebildet. Der Ladeanschluss weist in diesem Fall entsprechend einen Permanentmagneten auf, um im Ladezustand ein Umschalten des Reed-Kontaktes zu bewirken.

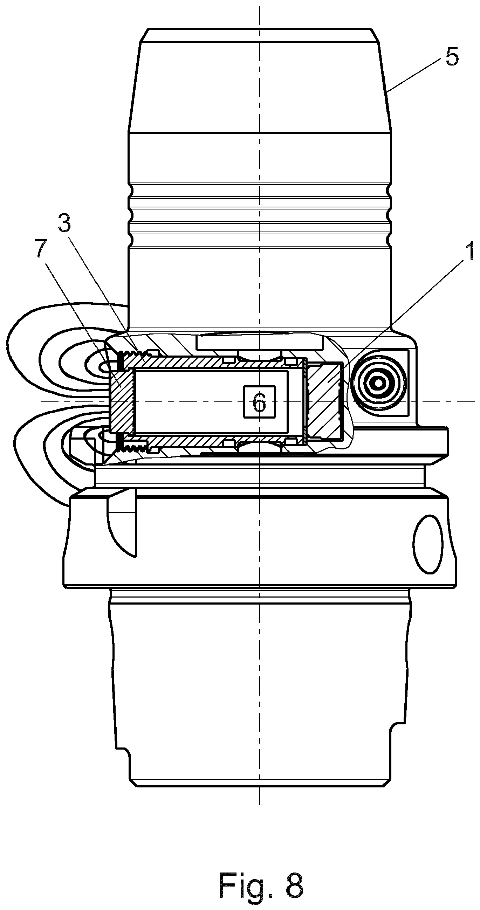

Eine beispielhafte Darstellung einer verbauten Messeinheit im Sendezustand in einem Werkzeughalter 5 ist in Figur 8 dargestellt, hierbei ist die Messeinheit mit Monopolantenne in das seitlich im Werkzeughalter befindliche Sackloch untergebracht. Die Messeinheit ist so weit in das Sackloch eingeführt, dass die Sensoreinheit in der Drehachse des Werkzeughalters liegt. In Figur 8 sind die Feldlinien der elektromagnetischen Wellen beim Sendevorgang zwischen Antennenpol und Gehäuse schematisch als Linien dargestellt. Schematisch ist der Werkzeughalter 5 in den Figuren 1 bis 6 mit den Bereichen, welche die Messeinheit an drei Seiten umgeben, dargestellt.

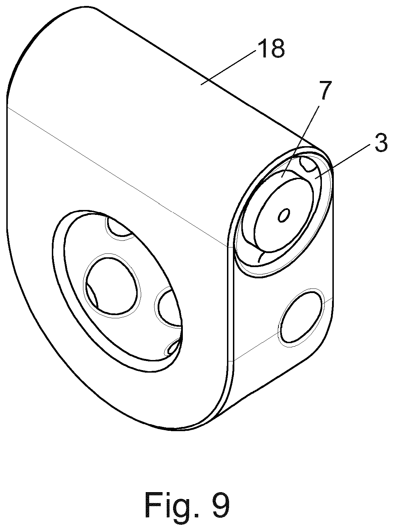

Ein weiteres Anordnungsbeispiel ist eine Messmanschette, welche in Figur 9 ausgeführt ist. Hierbei ist die Messeinheit innerhalb einer Messmanschette 18 befestigt. Die Manschettenform ermöglicht es, die Messeinheit relativ zu einem Element zu positionieren. Bevorzugt an zylindrischen Elementen wie Stangen und streben, insbesondere an Drehstähle. Hierfür besitzt die Manschette eine Öffnung zur Durchführung eines Elements und ein senkrecht dazu verlaufendes Sackloch, welches außerhalb der Durchführung liegt. In diesem Sackloch ist die Messeinheit so positioniert, dass die äußere Seite der Signalübertragungseinheit frei zugänglich ist.

In Figur 10 ist ein Ausführungsbeispiel einer Trennweiche einer erfindungsgemäßen Messeinheit für die Messeinheit gemäß Ausführungsbeispiel 1 und Ausführungsbeispiel 3 gezeigt. Die Trennweiche 10 ist in diesem Fall als passive Trennweiche mittels eines frequenzabhängigen Spannungsteilers ausgebildet. Die Trennweiche 10 weist 3 Anschlüsse a, b und c auf. Zwischen den Anschlüssen a und c ist ein Kondensator C zwischengeschaltet. Zwischen den Anschlüssen b und c ist eine Spule L zwischengeschaltet. Die Bezeichnung m kennzeichnet in Figur 10 das Bezugspotential. Die Bezeichnungen a, b, c und m sind ebenso in den Ausführungsbeispielen in Figuren 1 und 2 sowie 5 und 6 angegeben.

In diesem Ausführungsbeispiel besitzt der Kondensator C eine Kapazität von 15 pF und die Spule eine Induktivität von 33 nH. Der Anschluss a der Trennweiche ist mit dem Ausgang der Signalverarbeitungseinheit verbunden. Der Anschluss b der Trennweiche ist mit einem der Versorgungsanschlüsse des elektrischen Energiespeichers 1 verbunden. Der Anschluss c der Trennweiche ist mit dem Antennenpol 8 der Signalübertragungseinheit 7 verbunden. Der Kondensator C bildet für niederfrequente Signale einen hohen Blindwiderstand aus, so dass die niederfrequenten Signale zwischen Antennenpol (Anschluss c) und Signalverarbeitungseinheit (Anschluss a) einer starken Dämpfung unterliegen und somit im Wesentlichen keine Verbindung (eine Verbindung mit sehr hoher Dämpfung) für niederfrequente Signale zwischen Antennenpol und Signalverarbeitungseinheit besteht.

Die Spule L der Trennweiche bildet für niederfrequente Signale einen Blindwiderstand aus, so dass die niederfrequenten Signale zwischen Antennenpol (Anschluss a) und dem Versorgungsanschluss (Anschluss b) des elektrischen Energiespeichers einer geringen Dämpfung unterliegen. Für niederfrequente Signale besteht somit eine Verbindung (mit geringer Dämpfung) zwischen Antennenpol und Versorgungsanschluss.

Im Falle des Ausführungsbeispiels bildet der Kondensator C für hochfrequente Signale einen niedrigen Blindwiderstand aus, so dass die hochfrequenten Signale zwischen Signalverarbeitungseinheit (Anschluss a) und Antennenpol (Anschluss c) einer geringen Dämpfung unterliegen. Für hochfrequente Signale besteht somit eine Verbindung (mit geringer Dämpfung) zwischen Signalverarbeitungseinheit und Antennenpol.

Die Spule L der Trennweiche bildet für hochfrequente Signale einen großen Blindwiderstand aus, so dass die hochfrequenten Signale zwischen Antennenpol (Anschluss c) und dem Versorgungsanschluss (Anschluss b) des elektrischen Energiespeichers einer großen Dämpfung unterliegen. Hochfrequente Signale besteht somit im Wesentlichen keine Verbindung (eine Verbindung mit sehr hoher Dämpfung) zwischen Antennenpol (Anschluss c) und dem Versorgungsanschluss (Anschluss b) des elektrischen Energiespeichers.

Die vorliegende Konfiguration der in Figur 10 dargestellten Frequenzweiche ist insbesondere für niederfrequente Signale im Bereich 0 Hz bis 10 Hz und für hochfrequente Signale im Bereich 2400 MHz bis 2480 MHz geeignet.

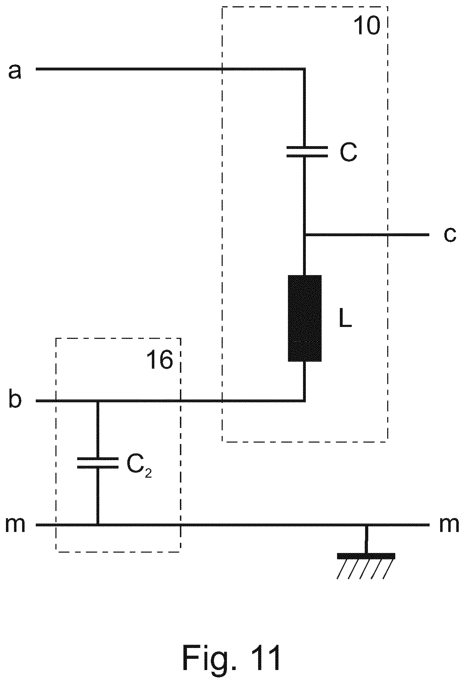

In Figur 11 ist ein weiteres Ausführungsbeispiel einer ersten Trennweiche 10 einer erfindungsgemäßen Messeinheit nach Abwandlung des zweiten Ausführungsbeispiels (Ausführung als passive Frequenzweiche) gezeigt. Die Trennweiche 10 ist in diesem Fall als passive Trennweiche in Form eines frequenzabhängigen Spannungsteilers ausgebildet. Die Trennweiche 10 weist 3 Anschlüsse a, b und c auf. Zwischen den Anschlüssen a und c ist ein Kondensator C zwischengeschaltet. Zwischen den Anschlüssen b und c ist eine Spule L zwischengeschaltet. Die Bezeichnung m kennzeichnet auch in Figur 11 das Bezugspotential. Neben der ersten Trennweiche ist in Figur 11 die zweite Trennweiche 16 gezeigt. Im gezeigten Ausführungsbeispiel weist die zweite Trennweiche einen Kondensator C₂ auf. Dieser Kondensator C₂ ist zwischen dem Anschluss b und dem Bezugspotential m zwischengeschaltet. Die Bezeichnungen a, b, c und m sind ebenso in den Ausführungsbeispielen in Figuren 3 und 4 angebracht.

In diesem Ausführungsbeispiel besitzt der Kondensator C eine Kapazität von 15 pF und die Spule eine Induktivität von 33 nH. Der Anschluss a der ersten Trennweiche ist mit dem Ausgang der Signalverarbeitungseinheit verbunden. Der Anschluss b der ersten Trennweiche ist mit einem der Versorgungsanschlüsse des elektrischen Energiespeichers 1 verbunden. Der Anschluss c der ersten Trennweiche ist mit dem Antennenpol 8 der Signalübertragungseinheit 7 verbunden. Der Kondensator C bildet für niederfrequente Signale einen hohen Blindwiderstand aus, so dass die niederfrequenten Signale zwischen Antennenpol (Anschluss c) und Signalverarbeitungseinheit (Anschluss a) einer starken Dämpfung unterliegen und somit im Wesentlichen keine Verbindung (eine Verbindung mit sehr hoher Dämpfung) für niederfrequente Signale zwischen Antennenpol und Signalverarbeitungseinheit besteht.

Der Kondensator C₂ der zweiten Trennweiche bildet für niederfrequente Signale einen hohen Blindwiderstand aus, so dass die niederfrequenten Signale zwischen dem Versorgungsanschluss des elektrischen Energiespeichers 1 und dem Gegenpol des elektrischen Energiespeichers 1 einer starken Dämpfung unterliegen und somit im Wesentlichen keine Verbindung (eine Verbindung mit sehr hoher Dämpfung) für niederfrequente Signale zwischen Antennenpol und Signalverarbeitungseinheit besteht.

Die Spule L der ersten Trennweiche bildet für niederfrequente Signale einen Blindwiderstand aus, so dass die niederfrequenten Signale zwischen Antennenpol (Anschluss a) und dem Versorgungsanschluss (Anschluss b) des elektrischen Energiespeichers einer geringen Dämpfung unterliegen. Für niederfrequente Signale besteht somit eine Verbindung (mit geringer Dämpfung) zwischen Antennenpol und Versorgungsanschluss.

Im Falle des Ausführungsbeispiels bildet der Kondensator C der ersten Trennweiche für hochfrequente Signale einen niedrigen Blindwiderstand aus, so dass die hochfrequenten Signale zwischen Signalverarbeitungseinheit (Anschluss a) und Antennenpol (Anschluss c) einer geringen Dämpfung unterliegen. Für hochfrequente Signale besteht somit eine Verbindung (mit geringer Dämpfung) zwischen Signalverarbeitungseinheit und Antennenpol.

Der Kondensator C₂ der zweiten Trennweiche bildet für hochfrequente Signale einen niedrigen Blindwiderstand aus, so dass die hochfrequenten Signale zwischen dem Massenpol/Massenpolebene und Bezugspotential m (siehe Figur 3) einer geringen Dämpfung unterliegen. Für hochfrequente Signale besteht somit eine Verbindung (mit geringer Dämpfung) zwischen Massenpol/Massenpolebene und bilden somit das Bezugspotential m (gestrichelt in Figur 3) aus.

Die Spule L der ersten Trennweiche bildet für hochfrequente Signale einen großen Blindwiderstand aus, so dass die hochfrequenten Signale zwischen Antennenpol (Anschluss c) und dem Versorgungsanschluss (Anschluss b) des elektrischen Energiespeichers einer großen Dämpfung unterliegen. Hochfrequente Signale besteht somit im Wesentlichen keine Verbindung (eine Verbindung mit sehr hoher Dämpfung) zwischen Antennenpol (Anschluss c) und dem Versorgungsanschluss (Anschluss b) des elektrischen Energiespeichers.

Die vorliegende Konfiguration der in Figur 11 dargestellten Frequenzweiche ist insbesondere für niederfrequente Signale im Bereich 0 Hz bis 10 Hz und für hochfrequente Signale im Bereich 2400 MHz bis 2480 MHz geeignet.

### Bezugszeichen

- 1: elektrischer Energiespeicher
- 2a: erster Versorgungsanschluss
- 2b: zweiter Versorgungsanschluss
- 3: Gehäuse
- 4: Sensoreinheit
- 5: Werkzeughalter
- 6: Signalverarbeitungseinheit
- 7: Signalübertragungseinheit
- 8: Antennenpol
- 8a: Kontaktfläche
- 9: Massenpolebene
- 10: Trennweiche
- 11: Spannungsregler
- 12: Ladeanschluss
- 13a: erster Ladekontakt
- 13b: zweiter Ladekontakt
- 14: Transformator
- 15a, 15b: Permanentmagnete
- 16: zweite Trennweiche
- 17: Kontaktierungsstift
- 18: Manschette

## Patentansprüche

1. Messeinheit,
mit zumindest zwei Versorgungsanschlüssen (2a, 2b) zum Anschluss zumindest eines elektrischen Energiespeichers (1) zur Versorgung der Messeinheit mit elektrischer Energie,
zumindest einer Sensoreinheit (4), zum Ausgeben eines Messsignals, zumindest einer Signalverarbeitungseinheit (6) zum Verarbeiten des Messsignals der Sensoreinheit (4),
mindestens einer Signalübertragungseinheit (7) mit zumindest einer Antenne mit zumindest einem Antennenpol (8),
wobei Signalverarbeitungseinheit (6) und Signalübertragungseinheit (7) zusammenwirkend ausgebildet sind, um mittels der Antenne die verarbeiteten Messsignale zu übertragen,
**dadurch gekennzeichnet,**
**dass** die Messeinheit eine Trennweiche (10) aufweist, welche mit dem Antennenpol (8), der Signalverarbeitungseinheit (6) und mit einem der Versorgungsanschlüsse (2a, 2b) verbunden und dazu ausgebildet ist,
zum Übertragen der verarbeiteten Messsignale für hochfrequente Signale eine Verbindung zwischen der Signalverarbeitungseinheit (6) und dem Antennenpol (8) zum Übertragen der verarbeiteten Messsignale sowie zumindest eine gedämpfte, bevorzugt keine Verbindung für hochfrequente Signale zwischen dem Antennenpol (8) und dem Versorgungsanschluss auszubilden und
zum Laden eines an die Versorgungsanschlüsse (2a, 2b) angeschlossenen Energiespeichers (1) für niederfrequente Signale eine Verbindung zwischen dem Antennenpol (8) und dem Versorgungsanschluss zum Aufladen des an den Versorgungsanschluss angeschlossenen Energiespeichers (1) sowie zumindest eine gedämpfte, bevorzugt keine Verbindung für niederfrequente Signale zwischen Antennenpol (8) und der Signalverarbeitungseinheit (6) auszubilden
und **dass** an einer außenliegenden Seite der Signalübertragungseinheit (7) der Antennenpol (8) elektrisch kontaktierbar ist.

2. Messeinheit nach Anspruch 1,
**dadurch gekennzeichnet,**
**dass** die Trennweiche (10) als passive Trennweiche (10) ausgebildet ist, derart, dass für niederfrequente Signale ausschließlich eine Verbindung zwischen Antennenpol (8) und dem Versorgungsanschluss ausgebildet ist und für hochfrequente Signale ausschließlich eine Verbindung zwischen der Signalverarbeitungseinheit (6) und dem Antennenpol (8) ausgebildet ist.

3. Messeinheit nach Anspruch 2,
**dadurch gekennzeichnet,**
**dass** die Trennweiche (10) als Frequenzweiche, bevorzugt als passive Frequenzweiche, insbesondere als frequenzabhängiger Spannungsteiler ausgebildet ist.

4. Messeinheit nach Anspruch 1,
**dadurch gekennzeichnet,**
**dass** die Trennweiche (10) als aktiv schaltbare Trennweiche (10) ausgebildet ist, welche mittels eines Schaltsignals zwischen einem Ladezustand und einem Sendezustand umschaltbar ausgebildet ist,
wobei in dem Ladezustand für niederfrequente Signale eine Verbindung zwischen dem Antennenpol (8) und dem Versorgungsanschluss zum Aufladen des an den Versorgungsanschluss angeschlossenen Energiespeichers (1) sowie keine Verbindung für niederfrequente Signale zwischen Antennenpol (8) und der Signalverarbeitungseinheit (6) ausgebildet ist und in dem Sendezustand für hochfrequente Signale eine Verbindung zwischen der Signalverarbeitungseinheit (6) und dem Antennenpol (8) sowie keine Verbindung für hochfrequente Signale zwischen Antennenpol (8) und dem Versorgungsanschluss ausgebildet ist,
wobei bevorzugt in dem Ladezustand eine elektrisch leitende Verbindung zwischen dem Antennenpol (8) und dem Versorgungsanschluss zum Aufladen des an den Versorgungsanschluss angeschlossenen Energiespeichers (1) sowie keine elektrisch leitende Verbindung zwischen Antennenpol (8) und der Signalverarbeitungseinheit (6) ausgebildet ist und
in dem Sendezustand eine elektrisch leitende Verbindung zwischen der Signalverarbeitungseinheit (6) und dem Antennenpol (8) sowie keine elektrisch leitende Verbindung zwischen Antennenpol (8) und dem Versorgungsanschluss ausgebildet ist,
insbesondere, dass die Trennweiche (10) mittels eines elektrischen Schaltsignals, eines elektromagnetischen Wellenschaltsignals oder eines magnetischen Schaltsignals zwischen Ladezustand und Sendezustand umschaltbar ausgebildet ist.

5. Messeinheit nach Anspruch 4,
**dadurch gekennzeichnet,**
**dass** die Trennweiche (10) als aktiv schaltbarer Umschalter, insbesondere als Umschalt-Relais oder als Reed-Umschalter ausgebildet ist.

6. Messeinheit nach einem der vorangegangenen Ansprüche,
**dadurch gekennzeichnet,**
**dass** die hochfrequenten und niederfrequenten Signale durch eine Trennfrequenz unterteilt sind, welche bevorzugt im Bereich 1 Hz bis 2 GHz, insbesondere 50 MHz bis 2 GHz, bevorzugt 1 GHz bis 2 GHz liegt.

7. Messeinheit nach einem der vorangegangenen Ansprüche,
**dadurch gekennzeichnet,**
**dass** die Messeinheit ein elektrisch leitendes Gehäuse aufweist, bevorzugt ein ferromagnetisches Gehäuse aufweist, mit zumindest einer Öffnung, an welcher die Antenne angeordnet ist.

8. Messeinheit nach Anspruch nach einem der vorangegangenen Ansprüche,
**dadurch gekennzeichnet,**
**dass** die Signalübertragungseinheit (7) eine äußere Ebene mit dem Antennenpol (8) und eine innere Ebene mit einem Massenpol, zur Ausbildung einer Monopolantenne, aufweist.

9. Messeinheit nach einem der vorangegangenen Ansprüche,
**dadurch gekennzeichnet,**
**dass** die Trennweiche (10) derart ausgebildet ist, dass die Verbindung zwischen der Signalverarbeitungseinheit (6) und dem Antennenpol (8) für die niederfrequenten Signale eine Dämpfung von zumindest 30 dB, insbesondere 50 dB, vorzugsweise 75 dB, besonders vorzugsweise 100 dB, bevorzugt 120 dB, gegenüber einer nicht gedämpften Verbindung aufweist.

10. Messeinheit nach einem der vorangegangenen Ansprüche,
**dadurch gekennzeichnet,**
**dass** die Trennweiche (10) derart ausgebildet ist, dass die Verbindung zwischen dem Antennenpol (8) und dem Versorgungsanschluss für niederfrequente Signale eine Dämpfung von kleiner 30 dB, vorzugsweise kleiner 20 dB, besonders vorzugsweise kleiner 10 dB, bevorzugt kleiner 5 dB, besonders vorzugsweise kleiner 2 dB, insbesondere kleiner 1 dB gegenüber einer nicht gedämpften Verbindung aufweist.

11. Messeinheit nach einem der vorangegangenen Ansprüche,
**dadurch gekennzeichnet,**
**dass** die Trennweiche (10) derart ausgebildet ist, dass die Verbindung zwischen der Signalverarbeitungseinheit (6) und dem Antennenpol (8) für die hochfrequenten Signale zum Übertragen der verarbeiteten Messsignale eine Dämpfung kleiner 30 dB, vorzugsweise kleiner 20 dB, besonders vorzugsweise kleiner 10 dB, bevorzugt kleiner 5 dB, besonders vorzugsweise kleiner 2 dB, insbesondere kleiner 1 dB gegenüber einer nicht gedämpften Verbindung aufweist.

12. Messeinheit nach einem der vorangegangenen Ansprüche,
**dadurch gekennzeichnet,**
**dass** die Trennweiche (10) derart ausgebildet ist, dass die Verbindung zwischen dem Antennenpol (8) und dem Versorgungsanschluss zum Aufladen des an den Versorgungsanschluss angeschlossenen Energiespeichers (1) für die hochfrequenten Signale zum Übertragen der verarbeiteten Messsignale eine Dämpfung von zumindest 10 dB, bevorzugt zumindest 20 dB, insbesondere zumindest 30 dB, ganz insbesondere zumindest 40 dB gegenüber einer nicht gedämpften Verbindung aufweist.

13. Messsystem,
mit einer Messeinheit nach einem der vorangegangenen Ansprüche und einer Ladeeinheit mit zumindest einem Ladeanschluss (12),
wobei der Ladeanschluss (12) zum Anordnen an den Antennenpol (8) der Signalübertragungseinheit (7) ausgebildet ist und zumindest einen ersten elektrischen Ladekontakt (13a) aufweist, welcher derart angeordnet ist, dass bei an dem Antennenpol (8) der Signalübertragungseinheit (7) angeordneten Ladeanschluss (12) ein elektrisch leitender Kontakt zwischen Antennenpol (8) und dem ersten Ladekontakt (13a) des Ladeanschlusses (12) besteht.

14. Messsystem nach Anspruch 13,
**dadurch gekennzeichnet,**
**dass** das Messystem ausgebildet ist, den an die Messeinheit angeschlossenen elektrischen Energiespeichers (1) mittels Gleichstrom zu laden.

15. Messsystem nach einem der Ansprüche 13 und 14 und Anspruch 7,
**dadurch gekennzeichnet,**
**dass** der Ladeanschluss (12) einen zweiten elektrischen Ladekontakt (13b) aufweist, welcher derart angeordnet ist, dass bei an dem Antennenpol (8) der Signalübertragungseinheit (7) angeordneten Ladeanschluss (12) ein elektrisch leitender Kontakt zwischen dem Gehäuse (3) der Messeinheit und dem zweiten Ladekontakt (13b) des Ladeanschlusses (12) besteht.

## Claims

1. Measuring unit,
with at least two supply connections (2a, 2b) for connecting at least one electrical energy storage device (1) for supplying the measuring unit with electrical energy,
at least one sensor unit (4), for outputting a measuring signal,
at least one signal processing unit (6) for processing the measuring signal from the sensor unit (4),
at least one signal transmission unit (7) with at least one antenna with at least one antenna pole (8),
wherein the signal processing unit (6) and the signal transmission unit (7) are designed to cooperate, in order transmit the processed measuring signals by means of the antenna, **characterized in that**,
the measuring unit has a combiner (10), which is connected to the antenna pole (8), to the signal processing unit (6) and to one of the supply connections (2a, 2b) and is designed,
to transmit the processed measuring signals for high-frequency signals, to form a connection between the signal processing unit (6) and the antenna pole (8) for transmitting the processed measuring signals, as well as to form at least one damped, preferably no connection, for high-frequency signals between the antenna pole (8) and the supply connection and,
in order to charge an energy storage device (1) connected to the supply connections (2a, 2b) for low-frequency signals, to form a connection between the antenna pole (8) and the supply connection for charging the energy storage device (1) connected to the supply connection, as well as to form at least one damped, preferably no connection, for low-frequency signals between the antenna pole (8) and the signal processing unit (6)
and **in that** the antenna pole (8) can be electrically contacted on an external side of the signal transmission unit (7).

2. Measuring unit according to claim 1,
**characterized in that**
the combiner (10) is designed as a passive combiner (10), such that only one connection is formed between the antenna pole (8) and the supply connection for low-frequency signals and only one connection is formed between the signal processing unit (6) and the antenna pole (8) for high-frequency signals.

3. Measuring unit according to claim 2,
**characterized in that**
the combiner (10) is designed as a frequency diplexer, preferably as a passive frequency diplexer, in particular as a frequency-dependent voltage divider.

4. Measuring unit according to claim 1,
**characterized in that**
the combiner (10) is designed as an actively switchable combiner (10), which is designed to be switchable by means of a switching signal between a charging state and a transmitting state,
wherein, in the charging state for low-frequency signals, a connection is formed between the antenna pole (8) and the supply connection for charging the energy storage device (1) connected to the supply connection, and no connection is formed for low-frequency signals between the antenna pole (8) and the signal processing unit (6) and, in the transmitting state for high-frequency signals, a connection is formed between the signal processing unit (6) and the antenna pole (8), and no connection is formed for high-frequency signals between the antenna pole (8) and the supply connection,
wherein preferably, in the charging state, an electrically conductive connection is formed between the antenna pole (8) and the supply connection for charging the energy storage device (1) connected to the supply connection, and no electrically conductive connection is formed between the antenna pole (8) and the signal processing unit (6) and
in the transmitting state, an electrically conductive connection is formed between the signal processing unit (6) and the antenna pole (8), and no electrically conductive connection is formed between the antenna pole (8) and the supply connection,
in particular, **in that** the combiner (10) is designed to be switchable between the charging state and the transmitting state by means of an electrical switching signal, an electromagnetic wave switching signal or a magnetic switching signal.

5. Measuring unit according to claim 4,
**characterized in that**
the combiner (10) is designed as an actively switchable changeover switch, in particular as a changeover relay or as a reed switch.

6. Measuring unit according to any one of the preceding claims,
**characterized in that**
the high-frequency and low-frequency signals are divided by a separation frequency, which is preferably in the range of 1 Hz to 2 GHz, in particular 50 MHz to 2 GHz, preferably 1 GHz to 2 GHz.

7. Measuring unit according to any one of the preceding claims,
**characterized in that**
the measuring unit has an electrically conductive housing, preferably a ferromagnetic housing, with at least one opening, on which the antenna is arranged.

8. Measuring unit according to any one of the preceding claims,
**characterized in that**
the signal transmission unit (7) has an outer plane with the antenna pole (8) and an inner plane with a ground pole, to form a monopole antenna.

9. Measuring unit according to any one of the preceding claims,
**characterized in that**
the combiner (10) is designed such that the connection between the signal processing unit (6) and the antenna pole (8) for low-frequency signals has an attenuation of at least 30 dB, in particular 50 dB, preferably 75 dB, particularly preferably 100 dB, preferably 120 dB, compared to an undamped connection.

10. Measuring unit according to any one of the preceding claims,
**characterized in that**
the combiner (10) is designed such that the connection between the antenna pole (8) and the supply connection for low-frequency signals has an attenuation of less than 30 dB, preferably less than 20 dB, particularly preferably less than 10 dB, preferably less than 5 dB, particularly preferably less than 2 dB, in particular less than 1 dB, compared to an undamped connection.

11. Measuring unit according to any one of the preceding claims,
**characterized in that**
the combiner (10) is designed such that the connection between the signal processing unit (6) and the antenna pole (8) for high-frequency signals for transmitting the processed measuring signals has an attenuation of less than 30 dB, preferably less than 20 dB, particularly preferably less than 10 dB, preferably less than 5 dB, particularly preferably less than 2 dB, in particular less than 1 dB, compared to an undamped connection.

12. Measuring unit according to any one of the preceding claims,
**characterized in that**
the combiner (10) is designed such that the connection between the antenna pole (8) and the supply connection for charging the energy storage device (1) connected to the supply connection for high-frequency signals for transmitting the processed measuring signals has an attenuation of at least 10 dB, preferably at least 20 dB, in particular at least 30 dB, very particularly at least 40 dB, compared to an undamped connection.

13. Measuring system,
with a measuring unit according to any one of the preceding claims and a charging unit with at least one charging connection (12),
wherein the charging connection (12) is designed to be arranged on the antenna pole (8) of the signal transmission unit (7) and has at least one first electrical charging contact (13a), which is arranged such that, when the charging connection (12) is arranged on the antenna pole (8) of the signal transmission unit (7), there is an electrically conductive contact between the antenna pole (8) and the first charging contact (13a) of the charging connection (12).

14. Measuring system according to claim 13,
**characterized in that**
the measuring system is designed to charge the electrical energy storage device (1) connected to the measuring unit by means of a direct current.

15. Measuring system according to any one of claims 13 and 14 and claim 7,
**characterized in that**
the charging connection (12) has a second electrical charging contact (13b), which is arranged such that, when the charging connection (12) is arranged on the antenna pole (8) of the signal transmission unit (7), there is an electrically conductive contact between the housing (3) of the measuring unit and the second charging contact (13b) of the charging connection (12).

## Revendications

1. Unité de mesure,
avec au moins deux bornes d'alimentation (2a, 2b) pour le raccordement d'au moins un accumulateur d'énergie (1) électrique pour l'alimentation de l'unité de mesure en énergie électrique,
au moins une unité de détection (4) pour l'émission d'un signal de mesure,
au moins une unité de traitement de signal (6) pour le traitement du signal de mesure de l'unité de détection (4),
au moins une unité de transmission de signal (7) avec au moins une antenne présentant au moins un pôle d'antenne (8),
dans lequel l'unité de traitement de signal (6) et l'unité de transmission de signal (7) sont formées de manière coopérative afin de transmettre les signaux de mesure traités au moyen de l'antenne, **caractérisé en ce que**
l'unité de mesure présente un dispositif d'aiguillage de séparation (10) qui est relié au pôle d'antenne (8), à l'unité de traitement de signal (6) et à l'une des bornes d'alimentation (2a, 2b) et formé afin
d'établir pour la transmission des signaux de mesure traités pour des signaux haute fréquence une liaison entre l'unité de traitement de signal (6) et le pôle d'antenne (8) pour la transmission des signaux de mesure traités ainsi qu'au moins une liaison amortie, de préférence aucune liaison pour des signaux haute fréquence entre le pôle d'antenne (8) et le raccord d'alimentation et
d'établir pour la charge d'un accumulateur d'énergie (1) raccordé aux bornes d'alimentation (2a, 2b) pour des signaux basse fréquence une liaison entre le pôle d'antenne (8) et la borne d'alimentation pour la charge de l'accumulateur d'énergie (1) raccordé à la borne d'alimentation ainsi qu'au moins une liaison amortie, de préférence aucune liaison pour des signaux basse fréquence entre le pôle d'antenne (8) et l'unité de traitement de signal (6)
et **en ce que** le pôle d'antenne (8) peut être en contact électrique au niveau d'un côté extérieur de l'unité de transmission de signal (7).

2. Unité de mesure selon la revendication 1,
**caractérisée en ce que**
le dispositif d'aiguillage de séparation (10) est formé comme dispositif d'aiguillage de séparation (10) passif de telle manière qu'exclusivement une liaison entre le pôle d'antenne (8) et la borne d'alimentation soit établie pour des signaux basse fréquence et exclusivement une liaison entre l'unité de traitement de signal (6) et le pôle d'antenne (8) soit établie pour des signaux haute fréquence.

3. Unité de mesure selon la revendication 2,
**caractérisée en ce que**
le dispositif d'aiguillage de séparation (10) est formé comme dispositif d'aiguillage de fréquence, de préférence comme dispositif d'aiguillage de fréquence passif, en particulier comme diviseur de tension dépendant de la fréquence.

4. Unité de mesure selon la revendication 1,
**caractérisée en ce que**
le dispositif d'aiguillage de séparation (10) est formé comme dispositif d'aiguillage de séparation (10) commutable activement qui est formé de manière commutable au moyen d'un signal de commutation entre un état de charge et un état d'émission,
dans laquelle dans l'état de charge pour des signaux basse fréquence, une liaison entre le pôle d'antenne (8) et la borne d'alimentation pour la charge de l'accumulateur d'énergie (1) raccordé à la borne d'alimentation est établie ainsi qu'aucune liaison pour des signaux basse fréquence entre le pôle d'antenne (8) et l'unité de traitement de signal (6) n'est établie et dans l'état d'émission pour des signaux haute fréquence, une liaison entre l'unité de traitement de signal (6) et le pôle d'antenne (8) est établie ainsi qu'aucune liaison pour des signaux haute fréquence entre le pôle d'antenne (8) et le raccord d'alimentation n'est établie,
dans lequel de préférence dans l'état de charge, une liaison électroconductrice entre le pôle d'antenne (8) et la borne d'alimentation pour la charge de l'accumulateur d'énergie (1) raccordé à la borne d'alimentation est établie ainsi qu'aucune liaison électroconductrice entre le pôle d'antenne (8) et l'unité de traitement de signal (6) n'est établie et
dans l'état d'émission, une liaison électroconductrice entre l'unité de traitement de signal (6) et le pôle d'antenne (8) est établie ainsi qu'aucune liaison électroconductrice entre le pôle d'antenne (8) et la borne d'alimentation n'est établie,
en particulier que le dispositif d'aiguillage de séparation (10) est formé de manière commutable au moyen d'un signal de commutation électrique, d'un signal de commutation d'onde électromagnétique ou d'un signal de commutation magnétique entre l'état de charge et l'état d'émission.

5. Unité de mesure selon la revendication 4,
**caractérisée en ce que**
le dispositif d'aiguillage de séparation (10) est formé comme commutateur commutable activement, en particulier comme relais de commutation ou comme commutateur Reed.

6. Unité de mesure selon l'une quelconque des revendications précédentes,
**caractérisée en ce que**
les signaux haute fréquence et basse fréquence sont séparés par une fréquence de séparation qui se trouve de préférence dans la plage de 1 Hz à 2 GHz, en particulier de 50 MHz à 2 GHz, de préférence de 1 GHz à 2 GHz.

7. Unité de mesure selon l'une quelconque des revendications précédentes,
**caractérisée en ce que**
l'unité de mesure présente un boîtier électroconducteur, de préférence un boîtier ferromagnétique, avec au moins une ouverture, au niveau de laquelle l'antenne est agencée.

8. Unité de mesure selon l'une quelconque des revendications précédentes,
**caractérisée en ce que**
l'unité de transmission de signal (7) présente un plan extérieur avec le pôle d'antenne (8) et un plan intérieur avec un pôle de masse pour la formation d'une antenne monopole.

9. Unité de mesure selon l'une quelconque des revendications précédentes,
**caractérisée en ce que**
le dispositif d'aiguillage de séparation (10) est formé de telle manière que la liaison entre l'unité de traitement de signal (6) et le pôle d'antenne (8) pour les signaux basse fréquence présente un amortissement d'au moins 30 dB, en particulier 50 dB, de préférence 75 dB, de manière particulièrement préférée 100 dB, de préférence 120 dB, par rapport à une liaison non amortie.

10. Unité de mesure selon l'une quelconque des revendications précédentes,
**caractérisée en ce que**
le dispositif d'aiguillage de séparation (10) est formé de telle manière que la liaison entre le pôle d'antenne (8) et la borne d'alimentation pour des signaux basse fréquence présente un amortissement inférieur à 30 dB, de préférence inférieur à 20 dB, de manière particulièrement préférée inférieur à 10 dB, de préférence inférieur à 5 dB, de manière particulièrement préférée inférieur à 2 dB, en particulier inférieur à 1 dB par rapport à une liaison non amortie.

11. Unité de mesure selon l'une quelconque des revendications précédentes,
**caractérisée en ce que**
le dispositif d'aiguillage de séparation (10) est formé de telle manière que la liaison entre l'unité de traitement de signal (6) et le pôle d'antenne (8) pour les signaux haute fréquence pour la transmission des signaux de mesure traités présente un amortissement inférieur à 30 dB, de préférence inférieur à 20 dB, de manière particulièrement préférée inférieur à 10 dB, de préférence inférieur à 5 dB, de manière particulièrement préférée inférieur à 2 dB, en particulier inférieur à 1 dB par rapport à une liaison non amortie.

12. Unité de mesure selon l'une quelconque des revendications précédentes,
**caractérisée en ce que**
le dispositif d'aiguillage de séparation (10) est formé de telle manière que la liaison entre le pôle d'antenne (8) et la borne d'alimentation pour la charge de l'accumulateur d'énergie (1) raccordé à la borne d'alimentation pour les signaux haute fréquence pour la transmission des signaux de mesure traités présente un amortissement d'au moins 10 dB, de préférence d'au moins 20 dB, en particulier d'au moins 30 dB, tout particulièrement d'au moins 40 dB par rapport à une liaison non amortie.

13. Système de mesure
avec une unité de mesure selon l'une quelconque des revendications précédentes et une unité de charge avec au moins un port de charge (12),
dans lequel le port de charge (12) est formé pour l'agencement au niveau du pôle d'antenne (8) de l'unité de transmission de signal (7) et présente au moins un premier contact de charge (13a) électrique qui est agencé de telle manière qu'en cas de port de charge (12) agencé au niveau du pôle d'antenne (8) de l'unité de transmission de signal (7), un contact électroconducteur entre le pôle d'antenne (8) et le premier contact de charge (13a) du port de charge (12) existe.

14. Système de mesure selon la revendication 13,
**caractérisé en ce que**
le système de mesure est formé afin de charger l'accumulateur d'énergie (1) électrique raccordé à l'unité de mesure au moyen du courant continu.

15. Système de mesure selon l'une quelconque des revendications 13 et 14 et la revendication 7,
**caractérisé en ce que**
le port de charge (12) présente un second contact de charge (13b) électrique qui est agencé de telle manière qu'en cas de raccord de charge (12) agencé au niveau du pôle d'antenne (8) de l'unité de transmission de signal (7), un contact électroconducteur entre le boîtier (3) de l'unité de mesure et le second contact de charge (13b) du port de charge (12) existe.
